Europäisches Patentamt

(19) European Patent Office

Office européen des brevets

(11) Publication number: **0 292 197 B1**

(12) **EUROPEAN PATENT SPECIFICATION**

(45) Date of publication of patent specification:
06.11.91 Bulletin 91/45

(21) Application number: 88304302.8

(22) Date of filing: 12.05.88

(51) Int. Cl.⁵: **C08L 23/20, C08L 23/04,**
C08L 23/10, C09J 123/20,
// C08J5/18 , (C08L23/20,
23:04, 23:10)

(54) **Polymer blend for packaging film or sheet.**

(30) Priority: 15.05.87 US 49903

(43) Date of publication of application:
23.11.88 Bulletin 88/47

(45) Publication of the grant of the patent:
06.11.91 Bulletin 91/45

(84) Designated Contracting States:
AT BE CH DE ES FR GB GR IT LI LU NL SE

(56) References cited:
EP-A- 0 213 698
DE-B- 2 234 103
GB-A- 2 049 707
GB-A- 2 060 658
US-A- 4 354 004

(73) Proprietor: SHELL OIL COMPANY
900, Louisiana
Houston Texas 77001 (US)
Proprietor: MITSUI PETROCHEMICAL
INDUSTRIES, LTD.
2-5, Kasumigaseki 3-chome Chiyoda-ku
Tokyo 100 (JP)

(72) Inventor: Hwo, Charles C.
2710 Sugarwood Drive
Sugarland, TX 77478 (US)

(74) Representative: Myerscough, Philip Boyd et al
J.A.Kemp & Co. 14, South Square Gray's Inn
London, WC1R 5EU (GB)

## Description

The present invention relates to a polymer blend which can be used to provide a heat sealable wrapping or packaging film or sheet (for ease of reference mention will subsequently be made only to film) which is capable of forming a peelable seal. The seal is achievable either between two films of this kind, or between one film of this kind and a polypropylene packing film without the need for an adhesive.

A peelable seal is defined to be the seal between two films produced by heat sealing or impulse sealing, the seal thus formed having the property of being able to open in the original plane of joining of the two films by the action of a pulling force, without wrenching off or tearing occurring in the material of the two films used to make up the seal. For the purposes of the present invention, the peelable seal must possess a mechanical resistance sufficient to maintain the integrity and the tight-seal properties of a packaging or wrapping round an article during storage and transport until such time as the packaging or wrapping is opened by the user of the article. The mechanical resistance of the peelable seal must be low enough to permit ready manual opening of the joint, i.e. without the use of an auxiliary instrument.

Many thermoplastic materials have been employed in the manufacture of films capable of forming peelable seals. For example US-A-4,189,519 discloses a blend for producing a peelable heat seal comprising (1) 50 to 90 percent by weight of a copolymer of 80 to 96 percent by weight ethylene and 4 to 20 percent by weight of an ethylenically unsaturated ester, and (2) 10 to 50 percent by weight of a crystalline isotactic polybutylene. While capable of forming a peel seal, film of this blend will not bond to polypropylene without an adhesive although it will bond to high density polyethylene (HDPE) without the use of adhesive.

US-A-3,900,534 discloses thermoplastic shrink films with good heat seal characteristics and good optical properties, but does not address the need for a peel seal film.

US-A-3,817,821 discloses blends of ethylene-vinyl acetate copolymer (EVA) with polybutylene at 20-40 w% but does not include polypropylene in the blend.

US-A-3,879,492 discloses blends of polybutylene + styrene – butadiene copolymer + low density polyethylene (LDPE) + high density polyethylene (HDPE) + polyisobutylene but does not include polypropylene in the blend.

US-A-4,539,263 discloses peel seals based on blends of comonomers and propylene/$\alpha$-olefin copolymer, but does not provide disclosure directed to polybutylenes.

EPA 213698 discloses blends of an ethylene polymer, a butene-1 polymer and a propylene polymer, the amount of the propylene polymer being less than 15 weight percent of the blend.

There has been a long felt need for wrapping or packaging materials having easy peelability at the seal and yet which will bond to polypropylene without the aid of an adhesive and which are retortable at temperatures of 120°C (250°F) or above.

It has now been found that certain properties, including film retortability at 120°C (250F) and above, heat seal strength, and peel seal characteristics, of packaging or wrapping films or sheets may be improved by making them from blends comprising a major proportion of a butene-1 polymer and minor proportions of an ethylenic polymer (at most 25 w%) and a propylene polymer (at least 25 w%).

According to the invention there is therefore provided a polymer blend comprising

(i) from 55 to 60 or 65, and especially about 65, weight percent of a butene-1 polymer,
(ii) from 10 to 20, and especially about 10, weight percent of an ethylenic polymer, and
(iii) from 25 to 35, and especially about 25, weight percent of a propylene polymer, the percentages being based on the combined weight of (i), (ii) and (iii).

The invention also provides a packaging film or sheet which is capable of forming a peel seal and is of a blend of the invention. The invention further provides a laminar structure comprising a polypropylene substrate to which is bonded, as by coextrusion or extrusion lamination, a coating layer of the blend or a packaging film or sheet in accordance with the invention.

The butene-1 polymer (i) can be a homopolymer or a copolymer of butene-1 with a copolymerisable comonomer such as another olefin, for example ethylene, propylene and alphaolefins of 5 to 8 carbon atoms. The copolymers will usually contain a major molar proportion of units derived from butene-1.

The ethylenic polymer (ii) may be a homopolymer or copolymer and suitable examples include linear low density polyethylene (LLDPE), low density polyethylene (LDPE), medium density polyethylene (MDPE), ethylene-vinyl acetate copolymer (EVA), ethylene-methyl acrylate copolymer (EMA) ethylene-ethyl acrylate copolymer (EEA), ethylene-butyl acrylate copolymer (EBA) and high density polyethylene (HDPE) and most preferably is low density polyethylene or ethylene-vinyl acetate copolymer. The copolymers will usually contain a major molar proportion of units derived from ethylene.

The propylene polymer (iii) can be a homopolymer or copolymer of propylene with a copolymerisable monomer. Propylene copolymers will usually contain a major molar proportion of units derived from propylene. The propylene polymer (iii) improves the processability of the blend and its retortability (resistance to the temperature of the retort).

The polymer blends of the invention may be formed into an oriented (preferably biaxially oriented) or unoriented film or sheet by casting or film blowing. After fabrication the film or sheet can be heat sealed by sealing jaws at a preset temperature, pressure and dwell. The seal strength is tested by an Instron tensile tester at 25.4 cm/min (10"/min) crosshead speed. Maximum strength on a 2.54 cm (one inch) width strip was designated as peel seal strength.

These manufacturing techniques apply to film, but the blends can be used to form sheeting. Film refers to shaped plastics that are comparatively thin and have a maximum thickness of 0.025 mm (0.01 inch). Sheeting refers to shaped plastics having a thickness greater than 0.025 mm (0.01 inch).

The present invention also provides a laminar structure which comprises a polypropylene substrate to which is bonded a coating layer of the blend of the invention or a film or sheet of the blend. The peel seal coat, which consists of the blend of the invention, can be coated or laminated onto the substrate. Alternatively the laminar structure can be made by making two separate films that are then laminated. The individual films can be made by, for example, film blowing (melt extrusion with a circular die) or the casting method (a flat die-melt extrusion process).

Melt extrusion with a flat die (casting) may be accomplished for thermoplastic polymers by using a flat die or slot die. The extrusion process starts with a polymer in a form that can be continuously into an extruder by means of a screw or pneumatic tube. Sometimes the polymers are combined with materials such as plasticizers, lubricants, stabilizers and colourants by means of, for example, Banbury mixers. The resulting mix is extruded through rod shaped dies and chipped into pellets. Pelletized polymer is fed into a screw conveyer into the end of a screw-type extruder and is heated and made into viscous fluid in a cylinder by means of a revolving, helical screw. The sheet leaving the die is quenched on a temperature-controlled chill roll. Finished films may be subject to a two-way stretching using continuous tenter-frame operations in biaxial orientation.

## EXAMPLE

Polybutylene PB 8240 ("DURAFLEX" — Registered Trade Mark) having a melt index of about 2.0 dg/min (ASTM method D-1238 condition "E") and a density of about 0.901 g/cm³ was dry blended in a tumbler mixer with 12 w% of an ethylenevinyl acetate copolymer (EVA) having a 15 weight percent vinyl acetate content and a melt index of 8.5 dg/min (USI UE632) and 25 w% or 35 w% of a polypropylene (PP) having a melt index of 12 dg/min (Shell PP 5820). The resultant blends were coextruded with a polypropylene (PP 1) having a melt index of 4 dg/min (Shell PP DX5097) at a die temperature of about 220°C into a laminar film about 133 μm (5.25 mils) thick using a flat die. The blend layer of each laminar film was about 44 μm (1.75 mils) thick and the polypropylene layer was about 89 μm (3.5 mils) thick. Peel sample strength was tested. The laminar films were sealed together in face to face contact at various temperatures, 280 kPa (40 psi) pressure and a dwell time of about 0.5 seconds. After the sealed film had cooled, strips having a unit width of 2.54 cm (1 inch) were cut from the films at locations across their width for testing of their seal strengths. Physical properties are given for the various strips in the Table below.

## TABLE

| Coextruded Film Structure | Peel Seal Strength, KG/unit width (lb./inch) Sealing Temperature, °C (°F) | | | |
|---|---|---|---|---|
| | 127 (260) | 132 (270) | 138 (280) | 143 (290) |
| PP1/(PB + 12 w% EVA + 35 w% PP) | 0.798 (1.76) | 0.948 (2.09) | 0.943 (2.08) | 0.998 (2.20) |
| PP1/(PB + 10 w% EVA + 25% PP) | 1.03 (2.26) | 1.15 (2.54) | 1.11 (2.45) | 1.28 (2.82) |

As may be seen from the Table, two different blends were tested for seal strength at sealing temperatures of 127, 132, 138 and 143°C (260, 270, 280 and 290°F). A satisfactory peel seal value is 0.68 Kg/unit width (1.5 lb/in) or above. The results show that a blend in accordance with the invention can be used to provide film which has good peel seal strength, good processability and will bond by coextrusion or extrusion lamination to a polypropylene substrate in a laminar structure without the need for an adhesive to achieve such bonding.

The coextruded film structure of PP 1/(PB + 10 w% EVA + 25 w% PP) was further tested for its autoclavability at 121°C (250°F). The film structure was sealed to itself at 138°C (280°F) jaw temperature with 0.5 second dwell and 280 kPa (40 psi) pressure to provide a sealed pouch. The resulting sealed pouch was filled with water and placed in an autoclave (pressure cooker) at 121°C (250°F) for 30 minutes. At the end of autoclave cycle, the sealed pouch remained unopen showing the ability of the seal to withstand the autoclave conditions.

## Claims

1. A polymer blend suitable for use in packaging film or sheet, which blend comprises ;
(i) from 55 to 65 percent by weight of a butene-1 polymer ;
(ii) from 10 to 20 percent by weight of an ethylenic polymer ; and
(iii) from 25 to 35 percent by weight of a propylene polymer, the percentages being based upon the combined weight of (i), (ii) and (iii).

2. A blend according to claim 1 which comprises about 65 percent by weight of (i), about 10 percent by weight of (ii) and about 25 percent by weight of (iii).

3. A blend according to claim 1 or 2 wherein (ii) is at least one of linear low density polyethylene, low density polyethylene, medium density polyethylene, ethylene-vinyl acetate copolymer (EVA), ethylene-methyl acrylate copolymer (EMA), ethylene-ethyl acrylate copolymer (EEA), ethylene-butyl acrylate copolymer (EBA) and high density polyethylene.

4. A packaging film or sheet which is capable of forming peel seals and is of a blend as claimed in any one of claims 1 to 3.

5. A packaging film or sheet according to claim 4 which is unoriented or is biaxially oriented.

6. A laminar structure comprising a polypropylene substrate to which is bonded a coating layer of a blend as claimed in any one of claims 1 to 3 or a packaging film or sheet as claimed in claim 4 or 5.

7. A laminar structure according to claim 6 which has been prepared by extrusion lamination.

## Patentansprüche

1. Polymermischung, geeignet zur Verwendung in Verpackungsfilmen oder -folien, dadurch gekennzeichnet, daß sie

(i) 55 bis 65 Gew.-% eines Buten-1-Polymeren,

(ii) 10 bis 20 Gew.-% eines ethylenischen Polymeren und

(iii) 25 bis 35 Gew.-% eines Propylenpolymeren enthält, wobei die prozentualen Anteile auf das kombinierte Gewicht von (i), (ii) und (iii) bezogen sind.

2. Mischung nach Anspruch 1, dadurch gekennzeichnet, daß sie etwa 65 Gew.-% (i), etwa 10 Gew.-% (ii) und etwa 25 Gew.-% (iii) enthält.

3. Mischung nach Anspruch 1 oder 2, dadurch gekennzeichnet, daß (ii) mindestens eine Komponente aus der Gruppe lineares Polyethylen niedriger Dichte, Polyethylen niedriger Dichte, Polyethylen mittlerer Dichte, Ethylen-Vinylacetat-Copolymer (EVA), Ethylen-Methylacrylat-Copolymer (EMA), Ethylen-Ethylacrylat-Copolymer (EEA), Ethylen-Butylacrylat-Copolymer (EBA) und Polyethylen hoher Dichte ist.

4. Verpackungsfilm oder -folie, der/die abziehbare Dichtungen bilden kann und aus einem Gemisch, wie in einem der Ansprüche 1 bis 3 beansprucht, besteht.

5. Verpackungsfilm oder -folie nach Anspruch 4, der/die nicht orientiert oder biaxial orientiert ist.

6. Laminare Struktur, umfassend ein Polypropylensubstrat, an das eine Überzugsschicht aus einer Mischung, wie in einem der Ansprüche 1 bis 3 beansprucht, oder ein/e Verpackungsfilm oder -folie, wie in einem der Ansprüche 4 oder 5 beansprucht, gebunden ist.

7. Laminare Struktur nach Anspruch 6, die durch Extrusions-Kaschieren hergestellt worden ist.

## Revendications

1. Mélange de polymères convenant pour être utilisé dans un film ou une feuille d'emballage, lequel mélange comprend :

(i) de 55 à 65% en poids d'un polymère du butène-1

(ii) de 10 à 20% en poids d'un polymère éthylénique

(iii) de 25 à 35% en poids d'un polymère du propylène, ces pourcentages étant rapportés au poids combiné de (i), (ii) et (iii).

2. Mélange conforme à la revendication 1, qui comprend environ 65% en poids de (i), environ 10% en poids de (ii) et environ 25% en poids de (iii).

3. Mélange conforme à la revendication 1 ou 2, dans lequel le polymère (ii) est au moins un polymère choisi parmi un polyéthylène basse densité linéaire, un polyéthylène basse densité, un polyéthylène moyenne densité, un copolymère éthylène/acétate de vinyle (EMA), un copolymère éthylène/acrylate d'éthyle (EEA), un copolymère éthylène/acrylate de butyle (EBA) et un polyéthylène haute densité.

4. Film ou feuille d'emballage, qui est capable de former des joints d'étanchéité pelables et qui est en un mélange tel que revendiqué dans l'une quelconque des revendications 1 à 3.

5. Film ou feuille d'emballage conforme à la revendication 4, qui n'est pas orienté ou est orienté biaxialement.

6. Structure stratifiée comprenand un substrat en polypropylène auquel est liée une couche de revêtement en un mélange tel que revendiqué dans l'une quelconque des revendications 1 à 3, ou un film ou une feuille d'emballage, tel que revendiqué dans la revendication 4 ou 5.

7. Structure stratifiée conforme à la revendication 6, qui a été préparée par extrusion/stratification.